# EUROPÄISCHE PATENTSCHRIFT

(11) **EP 2 755 864 B1**
(45) Veröffentlichungstag und Bekanntmachung des Hinweises auf die Patenterteilung: **13.07.2016**
(21) Anmeldenummer: 12778211.8
(22) Anmeldetag: 13.09.2012
(51) Int. Cl.: B60R 9/045, B60R 9/058

(54) **DACHLASTENTRÄGER FÜR KRAFTFAHRZEUGE**
ROOF CARRIER FOR VEHICLES
GALERIE DE TOIT POUR VÉHICULES AUTOMOBILES

(30) Priorität: 14.09.2011 DE 102011053603
(43) Veröffentlichungstag der Anmeldung: 23.07.2014
(73) Patentinhaber: JAC Products Europe GmbH, 42285 Wuppertal (DE)
(72) Erfinder: RAHM, Werner, 42281 Wuppertal (DE)
(74) Vertreter: Christophersen, Ruth
(86) Internationale Anmeldenummer: PCT/DE2012/100276
(87) Internationale Veröffentlichungsnummer: WO 2013/037363

(56) Entgegenhaltungen:
- EP-A1- 0 664 241
- EP-A2- 1 060 953
- WO-A1-96/24509
- DE-A1-102004 014 251
- DE-U1- 8 804 994
- US-A1- 2008 121 671

## Beschreibung

Die Erfindung betrifft einen Dachlastenträger für Kraftfahrzeuge mit einem sich zwischen zu beiden Seiten längs des Fahrzeugdachs dachfest angeordneten Relingleisten erstreckenden Querträger, der sich aus einem horizontalen Profilstab und an dessen Enden angeordneten Stützfüßen zusammensetzt, wobei Bestandteile jedes Stützfußes zwei Spannbacken sind, die mittels einer Spanneinrichtung unter Einspannen der Relingleiste aufeinander zu beweglich sind, und von denen zumindest eine Spannbacke um eine vertikale Achse schwenkbeweglich an dem Stützfuß gelagert ist.

Moderne Kraftfahrzeuge verfügen häufig über Dachrelingsysteme aus zwei in Fahrzeuglängsrichtung verlaufenden Profilen, die entweder über zwei oder mehr Relingfüße abgestützt einen gewissen Abstand zur Außenseite des Fahrzeugdachs aufweisen, oder die abstandslos direkt auf der Dachaußenseite befestigt oder im Blech der Dachhaut sogleich mit angeformt sind.

Aufgrund des aktuellen Karosseriedesigns verlaufen die rechte und die linke Relingleiste häufig nicht mehr parallel zueinander. Viele Pkw-Fahrzeugdächer sind nach hinten leicht verjüngend gestaltet, weshalb auch die beidseits angeordneten Relingleisten dieser Dachgestaltung folgen, und sich ihr Abstand nach fahrzeughinten verringert. In diesen Fällen muss der Querträger bei Montage weiter vorne eine größere wirksame Länge aufweisen als bei der Montage weiter hinten. Daher sind derartige Querträger längenverstellbar, indem sie sich aus einem Profilstab und an dessen Enden längsverschieblich angeordneten Stützfüßen zusammensetzen, die die Verbindung zu den Relingleisten herstellen.

Der nicht parallele Verlauf der beiden Relingleisten hat aber zur weiteren Folge, dass der Winkel zwischen der Relingleiste und dem Profilstab bzw. dem jeweiligen Stützfuß kein rechter Winkel ist, sondern ein Winkel von z. B. 87° oder 93°. Beim gegenseitigen Anziehen der beiden den Stützfuß an der Relingleiste haltenden Spannbacken kommt es zu einem Verkanten mit der Folge der Einleitung dauerhafter Biegekräfte in den Profilstab, vor allem aber mit der Folge einer erhöhten Druckbelastung auf die Relingleiste dort, wo aufgrund des Verkantens die Spannkräfte am größten sind. Diese Probleme lassen sich vermeiden, indem die Spannbacken individualisiert werden, d. h. an ein- und demselben Dachträger unterschiedliche Spannbacken verwendet werden, die jeweils nach Gestaltung und Winkelstellung nur für den jeweiligen Befestigungsort an der Relingleiste passen.

Aus der WO 96/24509 ist es bekannt, die die Relingleisten klemmenden Spannbacken mit nach Art von Adaptern austauschbaren Einsätzen zu versehen, um in Abhängigkeit vom fahrzeugspezifischen Design der Relingleiste individuell passende Spannbacken einzubauen. Die Grundelemente der Spannbacken sind zwar einheitlich, aber die daran befestigbaren Adapter sind individuell auf den Fahrzeugtyp abgestellt. Dies führt zu einem erhöhten Aufwand bei der Herstellung und der Bevorratung der Spannbacken. Außerdem ist dieser Dachlastenträger nicht wirklich universell, da für die oben beschriebenen Probleme bei nichtparallelen Relingsystemen keine Lösung bereitgestellt wird.

Dachlastenträger gemäß Oberbegriff sind aus der DE 10 2004 014 251 A1 und, in ähnlicher Bauweise, aus der EP 1 060 953 A2 bekannt. Eine erste Spannbacke, die fester Bestandteil des Stützfußes des Profilstabs ist, übergreift die Relingleiste von oben her, wohingegen eine zweite Spannbacke, welche auf einer vertikalen Drehachse gelagert ist, unter die Relingleiste schwenkbar und anschließend gegen die Relingleiste spannbar ist.

Weitere, mit beweglichen Spannbacken arbeitende Dachlastenträger für Kraftfahrzeuge sind aus der EP 0 664 241 A1, der DE 88 04 994 U1 und der US 2008/121671 A bekannt. Bei einigen dieser Dachlastenträger ist eine Schwenkbeweglichkeit im Verbindungsbereich mit der Dachreling gegeben, wozu der Stützfuß insgesamt um eine vertikale Achse verschwenkbar ist.

Der Erfindung liegt die **Aufgabe** zugrunde, einen universell einsetzbaren Dachlastenträger für Kraftfahrzeuge zu schaffen, der sich auch dann in unterschiedlichen Ausrichtungen an die Relingleisten montieren lässt, wenn diese in Fahrzeuglängsrichtung nicht zueinander parallel verlaufen.

Zur **Lösung** ist ein Dachlastenträger für Kraftfahrzeuge mit den eingangs angegebenen Merkmalen dadurch gekennzeichnet, dass die Stützfüße längsverschieblich in Bezug auf den Profilstab angeordnet sind, dass auch die andere Spannbacke um eine vertikale Achse schwenkbeweglich an dem Stützfuß gelagert ist, und dass die andere Spannbacke zusätzlich in Richtung des Profilstabs längsverschieblich an dem Stützfuß gelagert ist.

Durch die schwenkbewegliche Lagerung zumindest einer der beiden Spannbacken um eine vertikale Achse vermag sich die Ausrichtung der Anlagefläche der Spannbacke an die Ausrichtung der jeweiligen Relingleiste anzupassen. Auch bei einem Winkel zwischen Relingleiste und Querträger bzw. Profilstab von weniger als 90° oder mehr als 90.° wird ein verkantungsfreies Abstützen der Spannbacke an der Relingleiste ermöglicht, und es kommt zu keiner punktuell erhöhten Druckbelastungen auf die Wandung der Relingleiste.

Im Falle nicht parallel zueinander verlaufender Relingleisten lässt sich ein- und derselbe Querträger sowohl in einer Ausrichtung als auch in der entgegengesetzten Ausrichtung, also um 180° verdreht, auf dem Fahrzeugdach montieren, ohne dass Änderungen an den Spannbacken erforderlich sind. Im einen Fall nimmt die Spannbacke aufgrund ihrer Schwenkbeweglichkeit einen Winkel unter 90°, und im anderen Fall einen Winkel über 90° ein. In beiden Fällen liegt sie bündig bzw. flächig an der jeweiligen Seitenwand der Relingleiste an.

Auch die andere der beiden Spannbacken ist um eine vertikale Achse schwenkbeweglich an dem Stützfuß gelagert, und ferner ist die andere Spannbacke in Richtung des Profilstabs längsverschieblich an dem Stützfüß gelagert. Das gegeneinander Spannen der beiden Spannbacken wird durch die längsverschiebliche Anordnung der anderen Spannbacke an dem Stützfuß wesentlich verbessert. Auch ist für das Klemmen an der Relingleiste eine durch Längsverschieblichkeit der einen gegenüber der anderen Spannbacke erzielte Spannkraft günstiger, als ein gegenseitiges Verschwenken der Spannbacken.

Vorzugsweise setzt sich die Spannbacke aus einem Träger, der die Achse aufnimmt oder an dem die Achse ausgebildet ist, und aus einem gegen die Relingleisten abstützbaren Formteil zusammen. Das Formteil kann aus einem Material bestehen, vorzugsweise einem Weichkunststoff, welches weicher als das Material des Trägers ist. Durch das relativ härtere Material des Trägers lässt sich dieser verschleißarm und in definierter Beweglichkeit an dem Stützfuß lagern. Andererseits führt das im Vergleich weichere Material des Formteils zu einem weichen Abstützen der Spannbacke an der Relingleiste ohne Druckspitzen und ohne die Gefahr einer Beschädigung der Relingleiste bei zu starken Spannkräften.

Das Formteil kann zusätzlich zu seiner weicheren Materialstruktur in der Weise geformt sein kann, dass die Kontur seiner Anlagefläche passend zu der entsprechenden Kontur der Relingleiste gestaltet ist.

Mit einer weiteren Ausgestaltung des Dachlastenträgers wird vorgeschlagen, dass als vertikale Achse ein durch Bohrungen in dem Stützfuß und in der Spannbacke hindurchführender Bolzen dient. Die Bohrung im Stützfuß setzt sich vorzugsweise aus zwei Bohrungsabschnitten zusammen. Zwischen den beiden Bohrungsabschnitten befindet sich im Stützfuß ein Freiraum, der in Achsrichtung im Wesentlichen durch die Spannbacke ausgefüllt ist. Diese Ausgestaltung ermöglicht eine präzise und biegefreie Schwenklagerung der Spannbacke im Stützfuß. Da auf die Schwenkachse keine Biegebelastungen einwirken, bleibt die Funktion auch bei häufigem Gebrauch, d.h. häufiger Montage und Demontage des Querträgers erhalten.

Mit einer weiteren Ausgestaltung wird vorgeschlagen, dass die die zweite Spannbacke lagernde Achse an einem sowohl in Bezug auf den Profilstab, als auch in Bezug auf den Stützfuß längsverschieblichen Klemmelement angeordnet ist, und dass das Klemmelement in Längsrichtung des Profilstabes mit dem Profilstab und/oder dem Stützfuß verklemmbar ist. Mit dieser Ausgestaltung wird durch Betätigen der Spanneinrichtung eine Doppelfunktion erreicht. Zugleich mit dem Aufeinander-zu-Fahren der beiden Spannbacken wird der Stützfuß in Längsrichtung des Profilstabes an dem Profilstab verklemmt, und so die Längseinstellung des Stützfußes erzielt.

Das Verklemmen des Klemmelements wird vorzugsweise erreicht, indem dieses eine Rampe aufweist, die sich an einer starr an dem Stützfuß angeordneten Gegenrampe abstützt.

Ferner wird vorgeschlagen, dass die Spanneinrichtung einen sich quer zu beiden Spannbacken erstreckenden Zugstab aufweist, dessen eines Ende drehbar in einem Exzenterhebel gelagert ist, wobei sich der Exzenterhebel mit seiner Exzenterfläche gegen eine an dem Stützfuß angeordnete Druckfläche abstützt. Um die zur Befestigung des Dachlastenträgers erforderliche Spannkraft zu reduzieren, kann der Hebelarm des Exzenterhebels verlängerbar sein. Als Hebelverlängerung dient z.B. eine teleskopierbare Hebelverlängerung, jedoch sind auch andere technische Maßnahmen möglich, um den wirksamen Hebelarm des Exzenterhebels zu verlängern.

Ausführungsbeispiele eines Dachlastenträgers werden im Folgenden anhand der zugehörigen Zeichnungen erläutert. Darin zeigen:
- Fig. 1: einen Längsschnitt durch den Querträger eines Dachlastenträgers im Bereich des einen Stützfußes des Querträgers in festgespanntem Zustand und mit aufgesetzter Schutzkappe;
- Fig. 2: die Gegenstände nach Fig. 1 in gelöstem, also nicht festgespanntem Zustand und ohne die Schutzkappe;
- Fig. 3: eine zweite Ausführungsform eines Exzenterhebels.

Auf einem Fahrzeugdach 2 befestigt ist zu beiden Längsseiten des Fahrzeugdachs jeweils eine Relingleiste 1, wobei auf den Zeichnungen nur der rechte Rand des Fahrzeugdachs 2 wiedergegeben ist und daher auch nur die dort befestigte Relingleiste 1. Bestandteile des Dachlastenträgers sind außerdem ein quer über das Fahrzeugdach 2 angeordneter Profilstab 3 sowie ein an dessen Ende längsverschieblich in Bezug auf den Profilstab 3 angeordneter Stützfuß 5. Der Stützfuß 5 bildet die lösbare Verbindung zwischen dem Profilstab 3 und der jeweiligen Relingleiste 1. Auf dem Profilstab 3, vorzugsweise einem Aluminiumprofil, lassen sich in üblicher Weise Anbauteile befestigen, wie Fahrradträger, Gepäckträger, Tragesysteme für Surfbretter etc..

Zur Befestigung der aus dem Profilstab 3 und den beiden Stützfüßen 5 bestehenden Querträgers ist Bestandteil des vorzugsweise aus Kunststoff bestehenden Stützfußes 5 eine Spanneinrichtung 40. Mit dieser lassen sich zwei Spannbacken 20, 30 so vom fahrzeugaußen und fahrzeuginnen her gegen die Relingleiste 1 klemmen, dass es zu einem festen Halt des Stützfußes 5 an der Relingleiste 1 kommt. Dieser Halt sollte auch in Längsrichtung der Relingleiste 1 ausreichend sein, um den Querträger auch bei erheblichen an dem Querträger befestigten Lasten, wie z. B. Fahrrädern sicher zu halten.

Zur Anpassung der wirksamen Länge des Querträgers ist der Stützfuß 5 längsverschieblich gegenüber dem Profilstab 3. Zu diesem Zweck ist Bestandteil des Stützfußes 5 unter anderem ein daran befestigter Führungsblock 11, der von unten her in einer Längsöffnung 13 im Boden 14 des Profilstabs 3 sitzt. Die Breite des Führungsblocks 11 ist im Wesentlichen gleich der Breite der Längsöffnung 13, so dass sich der Führungsblock 11 und damit der Stützfuß 5 in Richtung der Längsöffnung 13 verschieben lässt, und sich so die Längsposition des Stützfußes 5 relativ zu dem Profilstab 3 verändern lässt. Dasselbe gilt selbstverständlich auch für den am anderen Ende des Profilstabs 3 angeordneten, zweiten Stützfuß.

Jeder Stützfuß 5 ist fahrzeugaußen mit einer im Wesentlichen vertikalen Bohrung 22 versehen, in der ein Bolzen 26 sitzt. Der Bolzen 26 führt außer durch die Bohrung 22 noch durch eine Bohrung in einem Träger 23 hindurch, der Bestandteil der Spannbacke 20 ist. Bestandteil der Spannbacke 20 ist ferner ein Formteil 24, welches an dem Träger 23 befestigt ist, und dessen Material weicher ist, als das Material des Trägers. Vorzugsweise besteht der Träger 23 der Spannbacke 20 aus einem relativ harten Kunststoff, hingegen das Formteil 24 aus einem im Vergleich weicheren Kunststoff. Die Kontur von Träger 23 und Formteil 24 ist bei dem hier beschriebenen Ausführungsbeispiel an die entsprechende Außenkontur der Relingleiste 1 angepasst. Die Zeichnungen lassen insbesondere erkennen, wie Träger 23 und Formteil 24 mit Vorsprüngen gestaltet sind, die in eine entsprechend gestaltete Längsnut an der Außenseite der Relingleiste 1 formschlüssig hineinpasst.

Entscheidend ist, dass die von fahrzeugaußen her gegen die Relingleiste 1 klemmende Spannbacke 20 nicht fest bzw. starr in dem Stützfuß 5 sitzt, sondern die Spannbacke 20 um eine durch den Bolzen 26 gebildete, vertikale Achse 21 schwenkbeweglich an bzw. in dem Stützfuß 5 gelagert ist.

Um die auf die Spannbacke 20 und den Bolzen 26 einwirkende Biegebelastung gering zu halten, setzt sich die den Bolzen 26 aufnehmende Bohrung 22 des Stützfußes 5 aus einem oberen Bohrungsabschnitt über dem Träger 23, und aus einem unteren Bohrungsabschnitt unter dem Träger 23 zusammen. Zwischen diesen beiden Bohrungsabschnitten befindet sich im Material des Stützfußes 5 ein Freiraum 27, welcher durch den Träger 23 weitgehend ausgefüllt ist. Der Träger 23 ist in diesem Freiraum 27 soweit gefangen als er, mit Ausnahme der gewünschten Schwenkbeweglichkeit um die Achse 21, keine nennenswerten Bewegungen durchführen kann.

Die zweite Spannbacke 30 befindet sich auf der anderen, hier der nach fahrzeuginnen weisenden Seite der Relingleiste 1. Herstellungstechnisch vorteilhaft ist die zweite Spannbacke 30 als einstückiges Winkelblech mit einem kurzen Schenkel 32 und einem hierzu in etwa rechtwinkligen langen Schenkel 33 ausgebildet. Der kurze Schenkel 32 nimmt eine vertikale Achse 31 auf, um die die zweite Spannbacke 30 schwenkbeweglich in Bezug auf den Stützfuß 5 gelagert ist. Auch die Achse 31 wird durch einen Bolzen 36 gebildet, wobei der Bolzen 36 eine vertikale Bohrung in dem kurzen Schenkel 32 durchsetzt, und ebenso eine hierzu fluchtende Bohrung in einem Klemmelement 35. Die innere Spannbacke 30 ist daher nicht unmittelbar am Material des Stützfußes 5, sondern an dem zusätzlichen Klemmelement 35 befestigt, ist jedoch in Bezug auf dieses Klemmelement 35 und damit auch in Bezug auf den Stützfuß 5 um die vertikale Achse 31 schwenkbeweglich gelagert.

Das Klemmelement 35 ist längsbeweglich in dem Profilstab 3 geführt. Das Klemmelement 35 lässt sich daher, ebenso wie der Stützfuß 5 selbst, in Längsrichtung des Profilstabs 3 verlagern.

Die Spanneinrichtung 40, mittels der die beiden Spannbacken 20, 30 parallel geführt aufeinander zu bewegbar sind, setzt sich im Wesentlichen aus einem Zugstab 41 und einem Exzenterhebel 45 zusammen. Mit seinem fahrzeuginneren Ende ist der Zugstab 41 gegen die innere Spannbacke 30 abgestützt. Diese Abstützung befindet sich an einem Ort B der zweiten Spannbacke 30, der sich zwischen dem Ort C der schwenkbeweglichen Lagerung der zweiten Spannbacke und jenem Ort A befindet, an dem die zweite Spannbacke 30 gegen die Relingstütze 1 anliegt. An dem Ort A kann die Spannbacke 30 kurze Zapfen 39 aufweisen, die für einen zusätzlichen Formschluss in napfförmige Öffnungen der Relingleiste 1 eingreifen.

Das andere, fahrzeugäußere Ende des Zugstabs 41 ist drehbar in dem Exzenterhebel 45 gelagert. Zu diesem Zweck sitzt in dem Exzenterhebel 45 ein Querbolzen 44, gegen den sich von außen her ein radial erweitertes Ende des Zugstabs 41 abstützt.

Der Exzenterhebel 45 besteht einstückig aus dem eigentlichen Exzenter, hier einer als Exzenterfläche 46 gestalteten Kontur, und aus einem quer von der Exzenterachse abstehenden Handgriff 48. Der hier nockenförmige Exzenter stützt sich mit seiner Exzenterfläche 46 gegen eine im Material des Stützfußes 5 ausgebildete Druckfläche 47 ab.

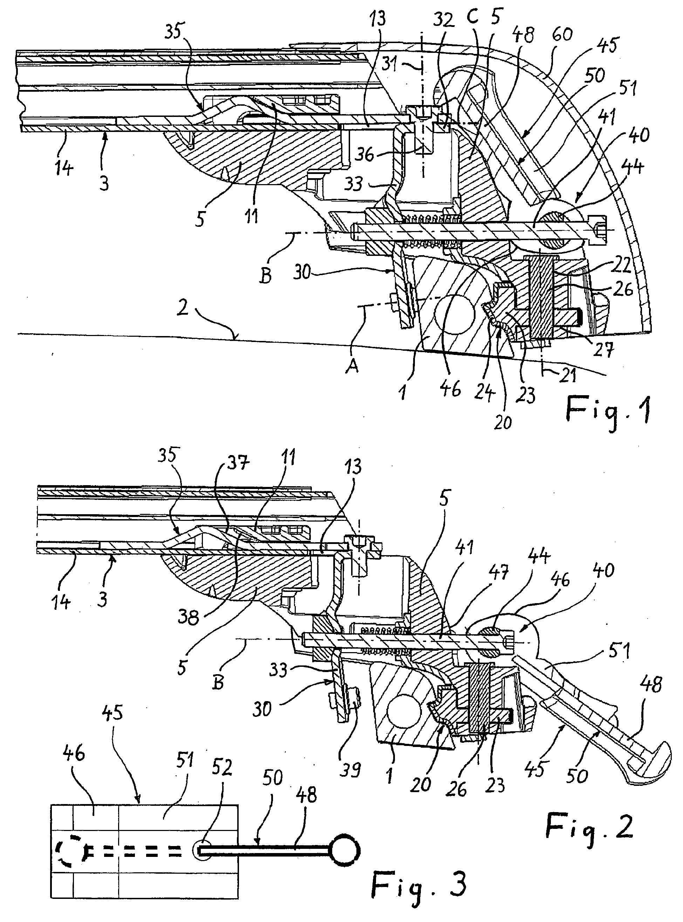

Wird, ausgehend von der Löseposition nach Fig. 2, der Exzenterhebel 45 in die Klemmposition nach Fig. 1 hoch geschwenkt, kommt es wegen der Exzentrizität zu einem nach fahrzeugaußen gerichteten Zug auf den Zugstab 41, wodurch dessen inneres Ende die innere Spannbacke 30 nach außen bewegt, bis nicht nur die äußere Spannbacke 20, sondern über die Reaktionskraft am Stützfuß 5 auch die innere Spannbacke 30 fest gegen die Relingleiste 1 anliegt, und diese kraftschlüssig zwischen den beiden Spannbacken 20, 30 eingeklemmt wird.

Um den wirksamen Hebelarm des Exzenterhebels 45 bedienerfreundlich zu verlängern, ist dieser mit einem teleskopierbaren Verlängerungsarm 50 versehen. Der Verlängerungsarm 50 wird in Längsrichtung aus dem Grundkörper 51 des Exzenterhebels herausgezogen, um diesen zu verlängern. Der Grundkörper 51 ist hierzu mit einer Längsführung für den Verlängerungsarm 50 versehen. Ein in den Exzenterhebel eingebauter Stopper verhindert ein zu weites Ausziehen.

Nach erfolgter Befestigung gemäß Fig. 2 wird der Verlängerungsarm 50 entlang der Längsführung wieder in die Grundposition in dem Grundkörper 51 zurückgeschoben. Alternativ kann die Hebelverlängerung federbelastet sein und sich, wenn sie losgelassen wird, von selbst in den Grundkörper 51 des Exzenterhebels 45 zurückziehen.

Beim Spannen der Spanneinrichtung 40 kommt es nicht nur zu dem beschriebenen Verklemmen an der Relingleiste 1, sondern zusätzlich zu einem Verklemmen des jeweiligen Stützfußes 5 in Längsrichtung des Profilstabs 3. Das Mittel hierzu ist das Klemmelement 35, welches sowohl gegenüber dem Boden 14 des Profilstabs 3, als auch gegenüber dem Führungsblock 11 des Stützfußes 5 verklemmt. Dies wird erreicht, indem das Klemmelement 35 eine Rampe 37 aufweist, die sich an einer starr an dem Führungsblock 11 oder direkt an dem Stützfuß 5 ausgebildeten Gegenrampe 38 abstützt. Im Ergebnis wird allein durch das Spannen des Exzenterhebels 45 sowohl das Verklemmen zwischen Stützfuß und Relingleiste 1, als auch das Verklemmen zwischen Stützfuß und Profilstab 3 erzielt.

Zum Schutz des Stützfußes 5 und insbesondere dessen Spanneinrichtung 40 ist an dem Stützfuß 5 eine Abdeckung 60 befestigbar. Die Abdeckung 60 lässt sich abnehmen oder wegschwenken, um besser an den Exzenterhebel 45 zu gelangen. Ferner ist die Abdeckung 60 mittels eines Schlosses verschließbar.

In Fig. 3 ist eine zweite Ausführungsform des Exzenterhebels 45 wiedergegeben. Bei dieser Bauart ist der Exzenterhebel nicht durch eine Längsbewegung teleskopierbar, vielmehr ist der den wirksamen Hebelarm verlängernde Verlängerungsarm 50 in einem Schwenkgelenk 52 mit dem freien Ende des Grundkörpers 51 verbunden. Die Fig. 3 zeigt die ausgeschwenkte Stellung, in welcher der Verlängerungsarm 50 in Fortsetzung des Grundkörpers 51 angeordnet ist. In der gestrichelt wiedergegebenen Ruhestellung hingegen nimmt der Verlängerungsarm 50 seine eingeschwenkte Stellung ein, in der beide Arme, d.h. der Grundkörper 51 und der Verlängerungsarm 50, in kompakter Anordnung Seite an Seite und längs zueinander angeordnet sind.

### Bezugszeichenliste

- 1: Relingleiste
- 2: Fahrzeugdach
- 3: Profilstab
- 5: Stützfuß
- 11: Führungsblock
- 13: Längsöffnung
- 14: Boden des Profilstabs
- 20: Spannbacke
- 21: Achse
- 22: Bohrung
- 23: Träger
- 24: Formteil
- 26: Bolzen
- 27: Freiraum
- 30: Spannbacke
- 31: Achse
- 32: kurzer Schenkel
- 33: langer Schenkel
- 35: Klemmelement
- 36: Bolzen
- 37: Rampe
- 38: Gegenrampe
- 39: Zapfen
- 40: Spanneinrichtung
- 41: Zugstab
- 44: Querbolzen
- 45: Exzenterhebel
- 46: Exzenterfläche
- 47: Druckfläche
- 48: Handgriff
- 50: Verlängerungsarm
- 51: Grundkörper
- 52: Schwenkgelenk
- 60: Abdeckung
- A: Ort
- B: Ort
- C: Ort

## Patentansprüche

1. Dachlastenträger für Kraftfahrzeuge mit einem sich zwischen zu beiden Seiten längs des Fahrzeugdachs dachfest angeordneten Relingleisten (1) erstreckenden Querträger, der sich aus einem horizontalen Profilstab (3) und an dessen Enden angeordneten Stützfüßen (5) zusammensetzt, wobei Bestandteile jedes Stützfußes (5) zwei Spannbacken (20, 30) sind, die mittels einer Spanneinrichtung (40) unter Einspannen der Relingleiste (1) aufeinander zu beweglich sind, und von denen zumindest eine Spannbacke (20) um eine vertikale Achse (21) schwenkbeweglich an dem Stützfuß (5) gelagert ist, **dadurch gekennzeichnet, dass** die Stützfüße (5) längsverschieblich in Bezug auf den Profilstab (3) angeordnet sind, dass auch die andere Spannbacke (30) um eine vertikale Achse (31) schwenkbeweglich an dem Stützfuß (5) gelagert ist, und dass die andere Spannbacke (30) zusätzlich in Richtung des Profilstabs (3) längsverschieblich an dem Stützfuß (5) gelagert ist.

2. Dachlastenträger nach Anspruch 1, **dadurch gekennzeichnet, dass** sich die Spannbacke (20) aus einem Träger (23), der die Achse (21) aufnimmt oder an dem die Achse (21) ausgebildet ist, und aus einem gegen die Relingleisten abstützbaren Formteil (24) zusammensetzt.

3. Dachlastenträger nach Anspruch 2, **dadurch gekennzeichnet, dass** das Formteil (24) aus einem Material, vorzugsweise einem Weichkunststoff, besteht, welches weicher als das Material ist, aus dem der Träger (23) besteht.

4. Dachlastenträger nach einem der Ansprüche 1 bis 3, **dadurch gekennzeichnet, dass** ein durch Bohrungen in dem Stützfuß (5) und der Spannbacke (20) hindurchführender Bolzen (26) die Achse (21) bildet.

5. Dachlastenträger nach Anspruch 4, **dadurch gekennzeichnet, dass** sich die Bohrung in dem Stützfuß (5) aus zwei Bohrungsabschnitten zusammensetzt, zwischen denen der Stützfuß (5) einen Freiraum (27) aufweist, der in Achsrichtung durch die Spannbacke (20) ausgefüllt ist.

6. Dachlastenträger nach Anspruch 1, **dadurch gekennzeichnet, dass** die andere Spannbacke (30) ein Winkelblech mit einem kurzen Schenkel (32) und einem hierzu im Wesentlichen rechtwinkligen langen Schenkel (33) ist, wobei der kurze Schenkel (32) die vertikale Achse (31) aufnimmt, und der lange Schenkel (33) im Bereich seines freien Endes gegen die Relingleiste abstützbar ist.

7. Dachlastenträger nach Anspruch 6, **dadurch gekennzeichnet, dass** die die andere Spannbacke (30) lagernde Achse (31) an einem sowohl in Bezug auf den Profilstab (3), als auch in Bezug auf den Stützfuß (5) längsverschieblichen Klemmelement (35) angeordnet ist, und dass das Klemmelement (35) in Längsrichtung des Profilstabes (3) mit dem Profilstab (3) und/oder dem Stützfuß (5) verklemmbar ist.

8. Dachlastenträger nach Anspruch 7, **dadurch gekennzeichnet, dass** zur Verklemmung des Klemmelements (35) dieses eine Rampe (37) aufweist, die sich an einer starr an dem Stützfuß (5) angeordneten Gegenrampe (38) abstützt.

9. Dachlastenträger nach einem der vorangehenden Ansprüche, **dadurch gekennzeichnet, dass** die Spanneinrichtung (40) einen sich quer zu beiden Spannbacken (20, 30) erstreckenden Zugstab (41) aufweist, dessen eines Ende drehbar in einem Exzenterhebel (45) gelagert ist, der sich mit seiner Exzenterfläche (46) gegen eine an dem Stützfuß (5) ausgebildete Druckfläche (47) abstützt.

10. Dachlastenträger nach Anspruch 9, **dadurch gekennzeichnet, dass** der Exzenterhebel (45) mit einer Hebelverlängerung (50) versehen ist, vorzugsweise einer teleskopierbaren Hebelverlängerung.

11. Dachlastenträger nach Anspruch 9 in Verbindung mit einem der Ansprüche 1 bis 8, **dadurch gekennzeichnet, dass** das andere Ende des Zugstabs (41) an einem Ort (B) an der anderen Spannbacke (30) abgestützt ist, der sich zwischen dem Ort (C) der schwenkbeweglichen Lagerung der anderen Spannbacke (30) und jenem Ort (A) befindet, an dem die andere Spannbacke (30) gegen die Relingstütze abstützbar ist.

12. Dachlastenträger nach einem der vorangehenden Ansprüche, **dadurch gekennzeichnet, dass** die eine der zwei Spannbacken (20, 30) von fahrzeugaußen, und die andere Spannbacke von fahrzeuginnen her gegen die Relingleiste (1) klemmt.

## Claims

1. Roof carrier for motor vehicles, with a crossmember which extends between railing strips (1) arranged on both sides along the vehicle roof in a manner mounted on the roof and which is composed of a horizontal profiled bar (3) and supporting feet (5) arranged at the ends of the latter, wherein parts of each supporting foot (5) are two clamping jaws (20, 30) which are movable towards each other by means of a clamping device (40), with the railing strip (1) being clamped, and of which at least one clamping jaw (20) is mounted on the supporting foot (5) so as to be pivotable about a vertical axis (21), **characterized in that** the supporting feet (5) are arranged in a longitudinally displaceable manner with respect to the profiled bar (3), **in that** the other clamping jaw (30) is also mounted on the supporting foot (5) so as to be pivotable about a vertical axis (31), and **in that** the other clamping jaw (30) is mounted on the supporting foot (5) so as to be additionally longitudinally displaceable in the direction of the profiled bar (3).

2. Roof carrier according to Claim 1, **characterized in that** the clamping jaw (20) is composed of a carrier (23), which accommodates the axis (21) or on which the axis (21) is formed, and of a shaped part (24) which can be supported against the railing strips.

3. Roof carrier according to Claim 2, **characterized in that** the shaped part (24) is composed of a material, preferably a soft plastic, which is softer than the material of which the carrier (23) is composed.

4. Roof carrier according to one of Claims 1 to 3, **characterized in that** a bolt (26) passing through bores in the supporting foot (5) and in the clamping jaw (20) forms the axis (21).

5. Roof carrier according to Claim 4, **characterized in that** the bore in the supporting foot (5) is composed of two bore portions, between which the supporting foot (5) has a clearance (27) which is filled in the axial direction by the clamping jaw (20).

6. Roof carrier according to Claim 1, **characterized in that** the other clamping jaw (30) is an angled plate with a short limb (32) and a long limb (33) which is substantially at a right angle with respect thereto, wherein the short limb (32) accommodates the vertical axis (31), and the long limb (33) can be supported in the region of its free end against the railing strip.

7. Roof carrier according to Claim 6, **characterized in that** the axis (31) supporting the other clamping jaw (30) is arranged on a jamming element (35) which is longitudinally displaceable both with respect to the profiled bar (3) and with respect to the supporting foot (5), and **in that** the jamming element (35) can be jammed to the profiled bar (3) and/or to the supporting foot (5) in the longitudinal direction of the profiled bar (3).

8. Roof carrier according to Claim 7, **characterized in that**, for the jamming of the jamming element (35), the latter has a ramp (37) which is supported on a mating ramp (38) arranged rigidly on the supporting foot (5).

9. Roof carrier according to one of the preceding claims, **characterized in that** the clamping device (40) has a tension bar (41) which extends transversely with respect to the two clamping jaws (20, 30) and the one end of which is mounted rotatably in an eccentric lever (45) which is supported with its eccentric surface (46) against a compression surface (47) formed on the supporting foot (5).

10. Roof carrier according to Claim 9, **characterized in that** the eccentric lever (45) is provided with a lever extension (50), preferably with a telescopic lever extension.

11. Roof carrier according to Claim 9 in conjunction with one of Claims 1 to 8, **characterized in that** the other end of the tension bar (41) is supported on the other clamping jaw (30) at a location (B) which is located between the location (C) of the pivotable mounting of the other clamping jaw (30) and that location (A) at which the other clamping jaw (30) can be supported against the railing support.

12. Roof carrier according to one of the preceding claims, **characterized in that** one of the two clamping jaws (20, 30) jams against the railing strip (1) from the vehicle exterior, and the other clamping jaw jams thereagainst from the vehicle interior.

## Revendications

1. Galerie de toit pour véhicule à moteur avec un support transversal s'étendant entre des barres (1) fixées sur le toit des deux côtés le long du toit du véhicule, qui est constitué d'une tige profilée horizontale (3) et de pieds d'appui (5) disposés à son extrémité, les composants de chaque pied d'appui (5) étant deux mâchoires de serrage (20, 30) qui peuvent être déplacées l'une vers l'autre au moyen d'un dispositif de serrage (40) en serrant la barre (1), et dont au moins une mâchoire de serrage (30) étant logée de manière pivotante autour d'un axe vertical (21) au niveau du pied d'appui (5), **caractérisée en ce que** les pieds d'appui (5) sont disposés de manière coulissante longitudinalement par rapport à la tige profilée (3), **en ce que** l'autre mâchoire de serrage (30) est également logé de manière pivotante autour d'un axe vertical (31) au niveau du pied d'appui (5) et **en ce que** l'autre mâchoire de serrage (30) est en outre logé de manière coulissante longitudinalement en direction de la tige profilée (3) au niveau du pied d'appui (5).

2. Galerie de toit selon la revendication 1, **caractérisée en ce que** la mâchoire de serrage (20), constituée d'un support (23), qui loge l'axe (21) ou sur lequel l'axe (21) est disposé et d'une pièce moulée (24) pouvant être appuyée contre les barres.

3. Galerie de toit selon la revendication 2, **caractérisée en ce que** la pièce moulée (24) est constituée d'un matériau, de préférence une matière plastique souple, qui est plus souple que le matériau dont le support (23) est constitué.

4. Galerie de toit selon l'une des revendications 1 à 3, **caractérisée en ce qu'**une tige (26) traversant des alésages dans le pied d'appui (5) et la mâchoire de serrage (20) constitue l'axe (21).

5. Galerie de toit selon la revendication 4, **caractérisée en ce que** l'alésage dans le pied d'appui (5) est constitué de deux portions d'alésage, entre lesquelles le pied d'appui (5) présente un espace libre (27) qui est rempli dans la direction axiale par la mâchoire de serrage (20).

6. Galerie de toit selon la revendication 1, **caractérisée en ce que** l'autre mâchoire de serrage (30) est une tôle angulaire avec un montant court (32) et un montant long (33) globalement perpendiculaire à celui-ci, le montant court (32) logeant l'axe vertical (31) et le montant long (33) pouvant être appuyé, au niveau de son extrémité libre, contre la barre.

7. Galerie de toit selon la revendication 6, **caractérisée en ce que** l'axe (31) logeant l'autre mâchoire de serrage (30) est disposée sur un élément de blocage (35) coulissant longitudinalement aussi bien par rapport à la tige profilée (3) que par rapport au pied d'appui (5), et **en ce que** l'élément de pincement (35) peut être bloqué dans la direction longitudinale de la tige profilée (3) avec la tige profilée (3) et/ou le pied d'appui (5).

8. Galerie de toit selon la revendication 7, **caractérisée en ce que**, pour le blocage de l'élément de blocage (35), celui-ci comprend une rampe (37) qui s'appuie contre une contre-rampe (38) disposée de manière rigide sur le pied d'appui (5).

9. Galerie de toit selon l'une des revendications précédentes, **caractérisée en ce que** le dispositif de serrage (40) comprend une tige de traction (41) s'étendant transversalement par rapport aux deux mâchoires de serrage (20, 30), dont une extrémité est logée de manière rotative dans un levier excentrique (45), qui s'appuie, avec sa surface excentrique (46), contre une surface de pression (47) prévue sur le pied d'appui (5).

10. Galerie de toit selon la revendication 9, **caractérisée en ce que** le levier excentrique (45) est muni d'une rallonge de levier (50), de préférence une rallonge de levier télescopique.

11. Galerie de toit selon la revendication 9 en lien avec l'une des revendications 1 à 8, **caractérisée en ce que** l'autre extrémité de la tige de traction (41) est appuyée, à un endroit (B), contre l'autre mâchoire de serrage (30), qui se trouve entre le lieu (C) du logement pivotant de l'autre mâchoire de serrage (30) et le lieu (A) où l'autre mâchoire de serrage (30) peut être appuyée contre le support de barre.

12. Galerie de toit selon l'une des revendications précédentes, **caractérisée en ce que** l'une des deux mâchoires de serrage (20, 30) se bloque de l'extérieur du véhicule et l'autre mâchoire de serrage se bloque de l'intérieur du véhicule contre la barre (1).
